# EUROPEAN PATENT APPLICATION

(11) **EP 2 587 768 A1**
(43) Date of publication of application: **01.05.2013**
(21) Application number: 12164192.2
(22) Date of filing: 13.04.2012
(51) Int. Cl.: H04L 29/08, G06F 21/60

(54) **Transmitting apparatus and receiving apparatus**

(30) Priority: 31.10.2011 JP 2011239792
(71) Applicant: Kabushiki Kaisha Toshiba, Tokyo 105-8001 (JP)
(72) Inventor: Nakajima, Atsushi, Tokyo, 105-8001 (JP); Morioka, Yasuhiro, Tokyo (JP); Fujiwara, Yoshinobu, Toky, 105-8001 (JP)
(74) Representative: Henkel, Breuer & Partner

(57) **Abstract**

One embodiment provides a transmitting apparatus, comprising: a content transmitting module configured to perform a content transmission of a first content to a receiving apparatus; a stopping module configured to stop the content transmission; a generating module configured to divide the first content into a second content and a third content when the content transmission is stopped by the stopping module, the second content corresponding to a part of the first content which has been transmitted to the receiving apparatus, the third content corresponding to a part of the first content which has not been transmitted to the receiving apparatus; an associating module configured to associate link information with each of the second content and the third content, the link information associating a backward end of the second content and a forward end of the third content; a link information transmitting module configured to transmit the link information to the receiving apparatus after the content transmission is stopped; and a communicating module configured to communicate with the receiving apparatus so that the second content is placed into a utilizable state in the receiving apparatus.

## Description

### CROSS-REFERENCE TO RELATED APPLICATION(S)

This application claims priority from Japanese Patent Application No. 2011-239792 filed on October 31, 2011, the entire contents of which are incorporated herein by reference.

### FIELD

Embodiments described herein relate generally to a transmitting apparatus and a receiving apparatus.

### BACKGROUND

In performing dubbing (moving and copy) of content subjected to copyright protection of ground wave digital broadcasting programs, etc. between equipments connected through an IP network, for example, content protection technology compatible with the DTCP-IP (Digital Transmission Content Protection over Internet Protocol) standard is used.

In the case of performing dubbing of content in conformity with the DTCP-IP**,** transmission of content is performed by Transaction Based Move. In the Transaction Based Move, the transmitting side has the utilization right of content during transmission of content, and after completion of transmission, utilization of content is made available on the receiving side by executing Commitment from the receiving side (for example, see JP-2010-231787-A).

On the other hand, in the case of interrupting transmission of content without execution of Commitment, the receiving side cannot utilize received content. As a result, transmission may need to be performed again from the leading part of the content. Sometimes, dubbing of content requires a time to the same degree as that of the content reproduction. In this case, usability of user may be damaged. Thus, there is desired a technology capable of improving usability of user in process according to the transmission of content.

### BRIEF DESCRIPTION OF DRAWINGS

A general architecture that implements the various features of the present invention will be described with reference to the drawings. The drawings and the associated descriptions are provided to illustrate embodiments and not to limit the scope of the present invention.
Fig. 1A illustrates a utilization mode of a transmitting apparatus and a receiving apparatus according to an embodiment, and Fig. 1B illustrates a system configuration thereof.
Figs. 2 and 3 illustrate content transmission sequences in the transmitting apparatus and the receiving apparatus.
Figs. 4A to 4C illustrate data configuration in management database managed by the transmitting apparatus and the receiving apparatus.
Fig. 5 illustrates a content transmission process in the transmitting apparatus.
Fig. 6 illustrates a content division process in the transmitting apparatus.
Fig. 7 illustrates a content reception process in the receiving apparatus.
Fig. 8 illustrates a content connection process in the receiving apparatus.

### DETAILED DESCRIPTION

One embodiment provides a transmitting apparatus, comprising: a content transmitting module configured to perform a content transmission of a first content to a receiving apparatus; a stopping module configured to stop the content transmission; a generating module configured to divide the first content into a second content and a third content when the content transmission is stopped by the stopping module, the second content corresponding to a part of the first content which has been transmitted to the receiving apparatus, the third content corresponding to a part of the first content which has not been transmitted to the receiving apparatus; an associating module configured to associate link information with each of the second content and the third content, the link information associating a backward end of the second content and a forward end of the third content; a link information transmitting module configured to transmit the link information to the receiving apparatus after the content transmission is stopped; and a communicating module configured to communicate with the receiving apparatus so that the second content is placed into a utilizable state in the receiving apparatus.

An embodiment will be described with reference to the drawings.

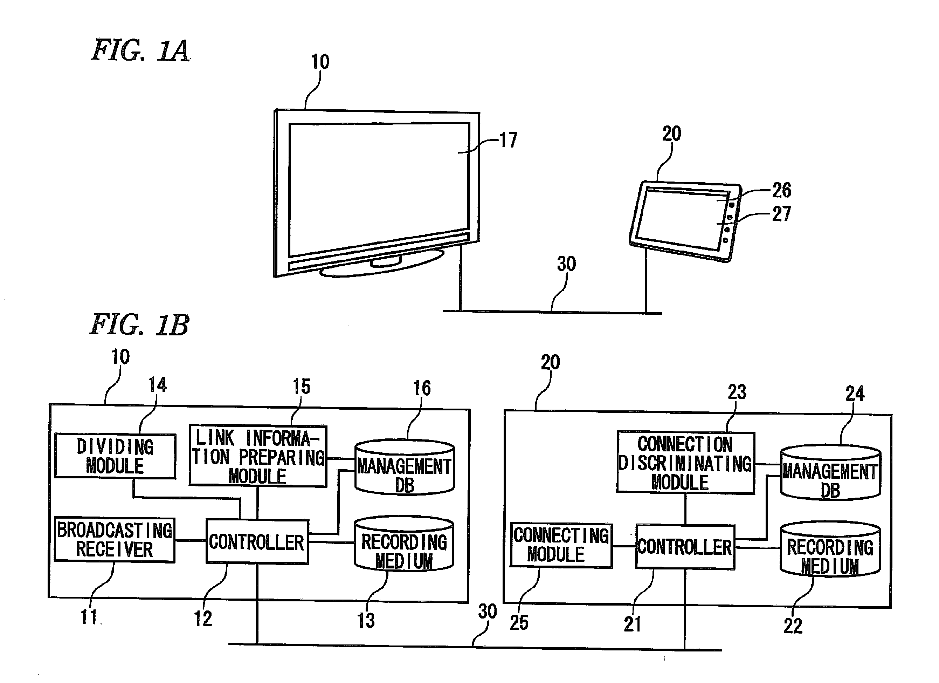

Fig. 1A illustrates a utilization mode of a transmitting apparatus and a receiving apparatus according to an embodiment. In this embodiment, transmitting apparatus 10 is realized as, e.g., a television apparatus adapted for receiving television broadcasts to record them, and receiving apparatus 20 is realized as, e.g., a communication terminal which can be connected to the transmitting apparatus 10 through an IP network 30. However, the transmitting apparatus 10 and the receiving apparatus 20 may be realized as the other kinds of apparatuses.

Fig. 1B illustrates a system configuration of the transmitting apparatus and the receiving apparatus. The transmitting apparatus 10 comprises a broadcasting receiving apparatus 11, a controller 12, a recording medium 13, a dividing module 14, a link information preparing module 15, a management database 16, and a display module 17 (not shown in Fig. 1B).

The broadcasting receiver 11 receives a broadcasting signal indicating content such as ground wave digital broadcasting program, etc. The broadcasting receiver 11 I demodulates a received broadcasting signal into a signal in a predetermined format to output the demodulated signal thus obtained to the controller 12.

The controller 12 has a function to control respective components of the transmitting apparatus 10. For example, the controller 12 controls picture recording process of a broadcasting signal of content from the broadcasting receiver 11. In this picture recording process, the controller 12 outputs a signal inputted from the broadcasting receiving apparatus 11, e.g., in a TS format to the recording medium 13 to record the signal thus obtained thereinto. The controller 12 records information relating to the number of copying times of the recorded content into the management database 16 in a manner associated with the content.

Although the example where the recording medium 13 is mounted in the transmitting apparatus 10 is explained, the recording medium 13 may be a recording medium for an external recording device connected by way of digital interface of USB, etc.

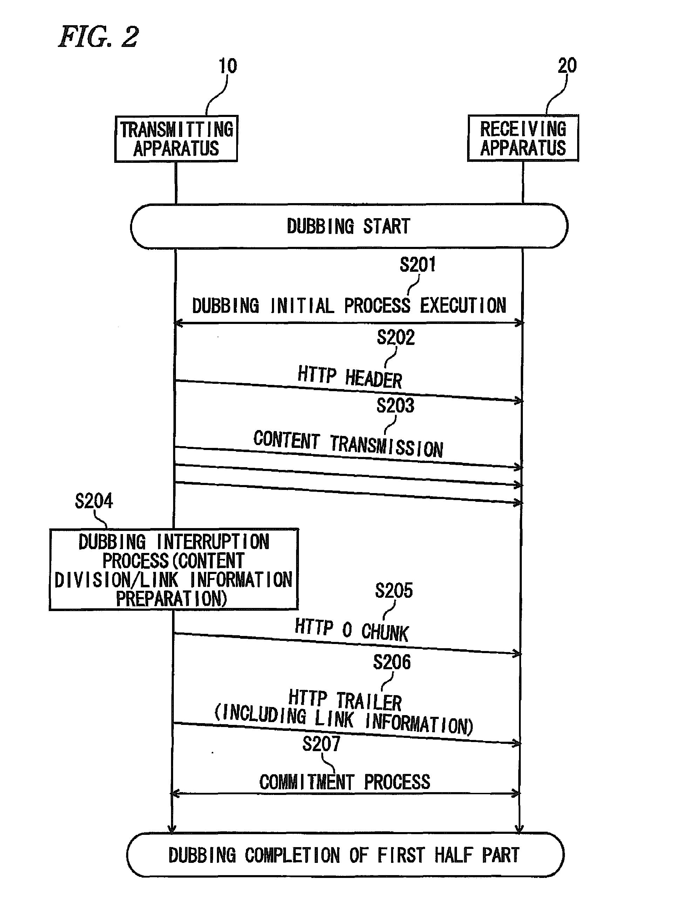

The controller 12 controls dubbing (including move and copy) through the IP network 30 for the content recorded on the recording medium 13. The control of the dubbing will be described with reference to Figs. 2 to 6 in conjunction with the functions of the dividing module 14, the link information preparing module 15 and the management database 16.

The display module 17 displays images based on a broadcasting signal received by the broadcasting receiving apparatus 11, and/or images corresponding to data of content recorded on the recording medium 13.

The receiving apparatus 20 comprises a controller 21, a recording medium 22, a connection discriminating module 23, a management database 24, a connecting module 25, a display module 26 (not shown in Fig. 1B), and a touch panel 27 (not shown in Fig. 1B), etc.

The controller 21 controls respective components of the receiving apparatus 20. Further, for example, the controller 21 communicates with the transmitting apparatus 10, and controls dubbing of content transmitted from the transmitting apparatus 10. The above-mentioned dubbing control will be described later with reference to Figs 2 to 4C, and Figs 7 and 8 along with the functions of the connection discriminating module 23, the management database 24 and the connecting module 25.

The recording medium 22 stores thereonto data of the content transmitted from the transmitting apparatus 10. When reproduction process is performed with respect to data of content placed into utilizable state among content stored on the recording medium 22, the display module 26 displays image of the content concerned.

The touch panel 27 is an operation input module of the pressure sensitive type or the electrostatic capacity type, etc. adapted for covering the display module 26, and serves to accept respective kinds of operation inputs from user.

A process sequence of content dubbing in the receiving apparatus 10 and the transmitting apparatus 20 will be described with reference to Fig. 2.

First, in the case where the controller 12 and the controller 21 start the content dubbing, they communicate with an external equipment serving as a counterpart of content transmission to execute an initial dubbing process (S201). In the dubbing initial process, the controller 12 and the controller 21 executes start notice of dubbing and/or exchange of encryption key, etc. by the procedure in accordance with Transaction Based Move of DTCP-IP.

Next, the controller 12 transmits HTTP header thereafter (S202) to start transmission of content data (S203). The controller 12 encrypts data subject to transmission by the encryption key obtained by the dubbing initial process to transmit the encrypted data thus obtained.

The controller 21 receives content data transmitted from the transmitting apparatus 10 to decode the received encrypted content data by encryption key to record the decoded data onto the recording medium 22. The recording medium 22 may be an external recording module connected to the receiving apparatus 20 by digital interface of USB, etc.

When the controller 12 accepts a request for interruption request of dubbing process, it executes interruption process of dubbing (S204). The interruption request may be generated by allowing the transmitting apparatus 10 to receive dubbing interruption operation from user. Alternatively, the interruption request may be made by allowing touch panel 27 of the receiving apparatus 20 to receive dubbing interrupting operation from user to allow the controller 21 to transmit an interruption request to the transmitting apparatus 10 in response thereto.

In the dubbing interruption process, the dividing module 14 divides content which was subject to dubbing before the interruption at the time point when, e.g., dubbing process takes place to generate two divided content of the first half and the latter half. At this time, for example, the dividing module 14 copies the content subject to dubbing to subtract, by one time, the number of copyable times of the content subject to the dubbing thereafter to divide the content obtained by the copy.

The link information preparing module 15 gives respectively identifier and link information to the first half part and the latter half part which have been generated by division to generate management information for associating content identifier and link information with the content to record the management information thus generated onto the management database. Here, the identifier of the first content is assumed as "ID_A", and the identifier of the latter half content is assumed as "ID_B".

The link information preparing module 15 generates, as link information, forward end link information indicating which content is connected before the content thereof and backward end link information indicating what content is connected after the content thereof. Namely, the link information preparing module 15 generates the backward end link information indicating content connected to the backward end of the content with respect to the first half content obtained by division. On the other hand, the backward end link information indicating the content connected to the backward end of the content is generated with respect to the latter half content obtained by division.

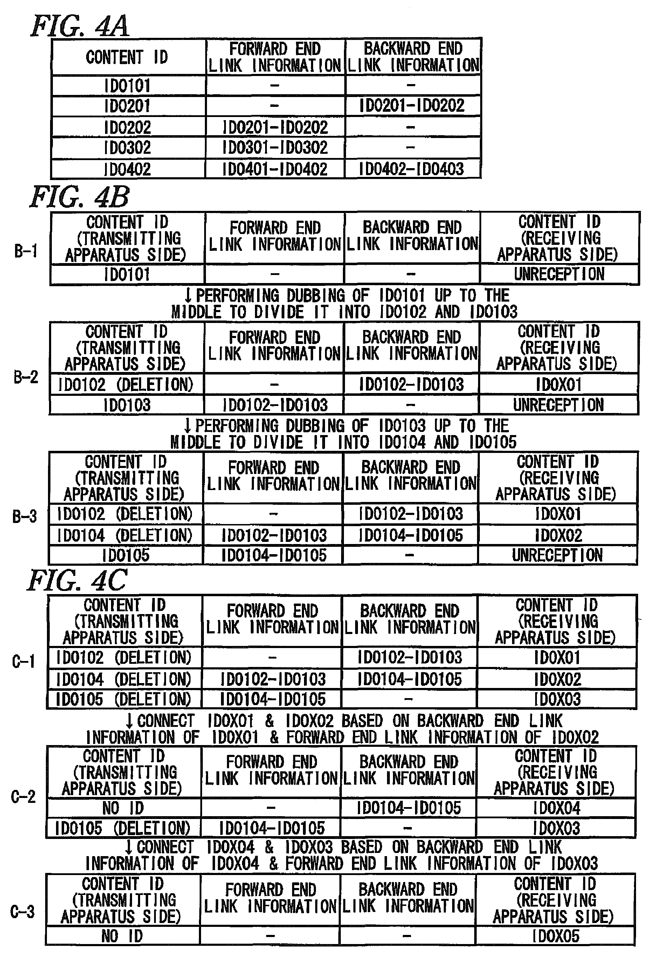

The forward end link information takes, e.g, label form of "(ID of content connected before) - (ID of own content)", and the backward end link information takes, e.g, label form of "(ID of own content) - (ID of content connected backwardly)". For this reason, the backward end link information of the first half content (identifier: ID_A) is "ID_A - ID_B", and the forward end link information of the latter half (identifier: ID_B) is "ID_A-ID_B". The detail of the link information will be described later with reference to Figs. 4A to 4C.

When content division and generation of link information with respect to the divided content are completed by the dubbing interruption process, the controller 12 transmits HTTP 0 chunk indicating end of data (S205), and transmits HTTP trailer including link information (S206). In the case where the controller 12 has already transmitted, to the receiving apparatus 20, the first half content of the divided content, it transmits HTTP trailer including the backward end link information of the first half content. On the other hand, in the case where the latter half content has been already transmitted, it transmits HTTP trailer including the forward end link information of the latter half content.

When HTTP 0 chunk and HTTP trailer are received, the controller 21 of the receiving apparatus transmits Commitment request to the transmitting apparatus 10 to allow the transmitting apparatus 10 to execute commitment process (S207). In the commitment process, the controller 12 deletes transmitted content. On the other hand, the controller 21 changes content data which has been received until now into utilizable state by the Commitment process. Namely, the content data recorded on the recording medium 22 is in unutilizable state until the Commitment process has been completed.

The unutilizable state indicates the state where, e.g., meta-data of file name and/or file size, etc. are not given with respect to data of content so that data cannot be accessed, etc. Further, in this case, the controller 21 gives meta-data to data of content after commitment process has been completed to change this state into utilizable state.

In the step S206, the link information is included in the HTTP trailer received by the receiving apparatus 20. Further, the controller 21 records, onto the management database 24, management information for allowing the content and the link information to be associated with each other which have been utilizable state by commitment.

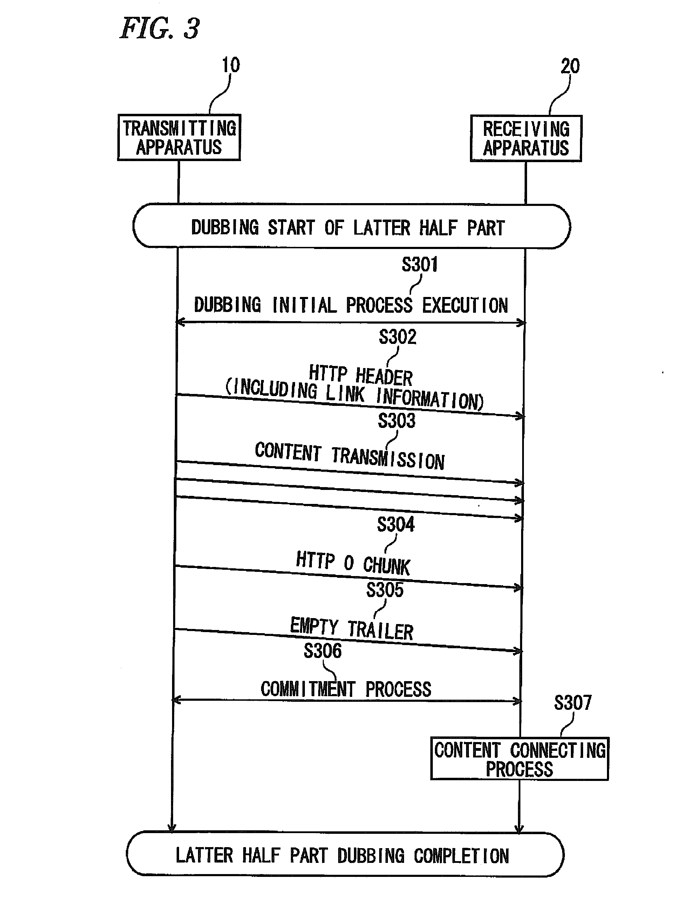

The restart operation of the dubbing process by the transmitting apparatus 10 and the receiving apparatus 20 will be described with reference to Fig. 3.

In the case of restarting dubbing, the controller 12 and the controller 21 execute dubbing initial process similarly to S201 (S301). Next, the controller 12 transmits link information which is associated with content subject to transmission by the dubbing along with HTTP Post request and/or HTTP GET response such that it is included into HTTP header (S302). Subsequently, the controller 12 encrypts data of content to transmit the encrypted data thus obtained to the receiving apparatus 20 (S303).

When all data of content subject to transmission are transmitted, the controller 12 transmits HTTP 0 chunk to notify that there is no remaining data (S304) to transmit empty HTTP trailer (S305). Further, the controller 12 executes commitment process (S305) to delete one or ones of transmitted content recorded on the recording medium 13.

The controller 21 of the receiving apparatus 20 executes commitment process to place the system state into content utilizable state (S305), and to execute the content connecting process based on the link information included in the header received in the step S302 and the link information received in the step S206 of Fig. 2 (S306). Specifically, the controller 21 extracts link information in correspondence with the link information received in the step S302 from the management database 24 to connect the content associated with the link information in correspondence therewith and the content obtained by commitment process in the step S306.

Although the sequence of Fig. 3 is executed, e.g., after the sequence of Fig. 2, the sequence of Fig. 3 is not necessarily executed after the sequence of Fig. 2. For example, in the case where the transmitting apparatus 10 transmits content from a middle position of undivided content also except for the case where content transmission is interrupted in accordance with dubbing interruption request as shown in Fig. 2, the transmitting apparatus 10 and the receiving apparatus 20 execute content transmission/reception in accordance with the sequence of Fig. 3. In the case where the transmitting apparatus 10 starts dubbing from a middle position of the content (any one position of the leading end and the backward end of content), the process is executed in accordance with the following sequence.

First, the transmitting apparatus 10 determines that a request for performing dubbing of content from a middle position is made in accordance with user operation onto the own apparatus or a control signal from the receiving apparatus 20. Then, the transmitting apparatus 10 and the receiving apparatus 20 execute dubbing initial process of step S301.

Further, the transmitting apparatus 10 divides content at a position corresponding to dubbing request (the above-described middle position) to generate the first half content and the latter half content. Further, the transmitting apparatus 10 gives respectively identifier and link information to the first half content and the last half content. The division and the operation to give identifier and link information are similar to the content division, and/or the operation to give identifier and the link information which are executed in step S204 of Fig. 2. The content division and the operation to give identifier and link information may be executed before the dubbing initial process.

Next, the transmitting apparatus 10 transmits forward end link information given to the latter half content such that it is included into HTTP header (S302) to execute transmission of the latter half content (S303). Further, the transmitting apparatus 10 and the receiving apparatus 20 execute process similar to those of the steps S304 to S307 of Fig. 3.

The content identifier, the forward end link information and the backward end link information will be described with reference to Figs. 4A to 4C.

Fig. 4A illustrates a data configuration of management information stored on the management database 16 of the transmitting apparatus 10.

As previously described above, the link information includes forward end link information indicating which content is connected before the content thereof, and backward end link information indicating which content is connected after the content thereof. Further, the forward end link information takes, e.g., label form of "(ID of content connected before) - (ID of the own content)", and the backward end link information takes, e.g., label form of "(ID of the own content) - (ID of content connected backwardly)". In addition, in the case where any data is not recorded as link information, "-" is recorded.

Here, the forward end link information and the backward end link information are not associated with ID0101. Namely, the content associated of ID0101 is not divided.

Moreover, the backward end link information indicating content connected to the backward end of the content is associated with the first half content obtained by division, and the backward end link information indicating content connected to the backward end of the content is associated with the latter half content obtained by division. The backward end link information "ID0201 - ID0202" is associated with ID0201, and the forward end link information "ID0201 - ID0202" is associated with ID0202. Namely, the contents with which ID0201 and ID0202 are associated are divided from the same content. ID0201 indicates the first half part, and ID0202 indicates the latter half part.

Assuming that content of the first half part obtained by further dividing content of ID0201 is designated as ID0203, and content of the latter half part obtained in the same manner is designated ID0204, the forward end link information of the content of ID0203 indicates" - ", and the backward end link information indicates "ID0203 - ID0204". Further, the forward end link information of the content of ID0204 is designated as "ID0203 - ID0204 - ID0202".

The forward end link information of ID0202 indicates "ID0201 - ID0202", identifier of ID0201 where no content exist is already included in the link information. However, in contents connecting process, since content connection is performed by comparing link information with each other so that they match with each other, it is not necessary that identifier indicated in the link information coincides with the content identifier.

ID0302 is identifier given to the content of the latter half part of the divided content. To the forward end of content indicated by ID0301, the backward end of different content indicated by the forward end link information "ID0301 - ID0302" is connected.

The content indicated by ID0403 is content divided twice or more, and corresponds to the middle part which is not the content of leading end or the terminal end thereof. Further, content with which "ID0401 - ID0402" is associated as backward end link information is connected to the forward end of the content indicated by ID0403. Content with which "ID0402 - ID0403" is associated, as the forward end link information, is connected to the backward end of the content indicated by ID0403.

The operation to give identifier and link information followed by the content division process will be described with reference to Fig. 4B.

First, as shown in (B-1), content of ID0101 is registered on the management database of the transmitting apparatus 10.

When dubbing process of content of ID0101 is started so that the dubbing process is interrupted in the middle to stop transmission of the content, the transmitting apparatus 10 divides content of the ID0101 into a transmitted part content (identifier: ID0102) and an untransmitted part content (identifier:ID0103) as shown in (B - 2). The transmitting apparatus 10 associates the content of ID0102 and the forward end link information ID0102 - ID0103 with each other, and associates the content of ID0103 and the forward end link information ID0102 - ID0103 with each other. Further, the transmitting apparatus 10 transmits, to the receiving apparatus 20, link information of the transmitted content ID0102.

When the commitment process is completed, content of ID0102 is deleted at the transmitting apparatus 10. On the other hand, the receiving apparatus 20 allows the received content to be placed into utilizable state, and gives content identifier ID0X01 to the content. In addition, the receiving apparatus 20 associates content identifier ID0X01 and the backward end link information ID0102 - ID0103 with each other to register them onto the management database.

Next, when the dubbing process of the content of ID0103 is restarted, the transmitting apparatus 10 transmits the forward end link information ID0102 - ID0103 of the content thereafter to perform transmission of content. Moreover, when dubbing is interrupted in the middle for a second time, the transmitting apparatus 10 divides transmitted content (identifier: ID0104) and untransmitted content (identifier: ID0105) as shown in (B - 3). The transmitting apparatus 10 associates the forward end link information ID0102 - ID0103 and the backward end link information ID0104 - ID0105 with the content of ID0104 to allow the content of ID0105 and the forward end link information ID0104 - ID0105 to be in correspondence with each other. Further, the transmitting apparatus 10 transmits, to the receiving apparatus 20, link information of the transmitted content (identifier: ID0104).

When the commitment process is completed, content of ID0104 is deleted at the transmitting apparatus 10. On the other hand, the receiving apparatus 20 allows the received content to be placed into utilizable state, and gives the content identifier ID0X02 to the content. In addition, the receiving apparatus 20 associates the forward end link information ID0102 - ID0103 and the backward end link information 1D0104 - ID0105 which have been transmitted from the transmitting apparatus 10 with the content identifier ID0X03.

When dubbing of the content of ID0105 is restarted in a manner as described above, the transmitting apparatus 10 transmits, to the receiving apparatus 20, the forward end link information ID0104 - ID0105 of the content. When the above-mentioned dubbing is completed, the receiving apparatus 20 starts content connecting operation.

Fig. 4C illustrates a content connecting process by the receiving apparatus 20.

The receiving apparatus 20 connects contents in which the forward end link information and the backward end link information match with each other (are in correspondence with each other). When link information of ID0X01 and ID0X02 match with each other (are in correspondence with each other) as shown in (C - 1), the receiving apparatus 20 connects contents indicated by these identifiers to generate content ID0X04. Moreover, the receiving apparatus 20 deletes link information which has been associated with the connected ends of ID0X01 and ID0X02 to associate the backward end link information ID0104 - ID0105 with the content of ID0X04. When link information of ID0X04 and ID0X03 are in correspondence with each other as shown in (C - 2), the receiving apparatus 20 connects contents as indicated by these identifiers to generate content ID0X05.

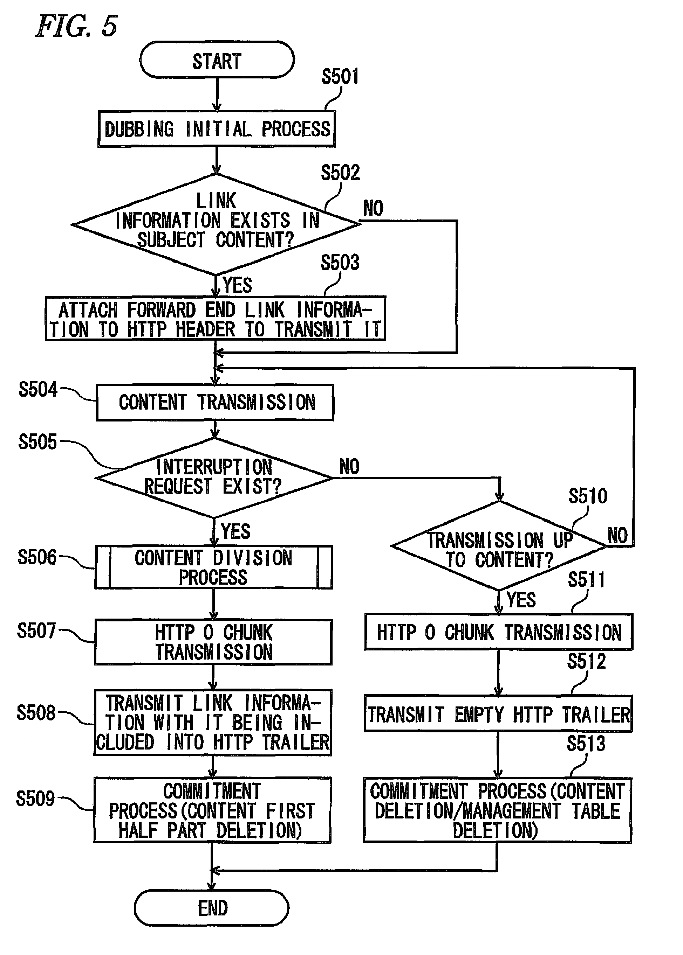

Next, the process flow according to content transmission by the transmitting apparatus 10 will be described with reference to Fig. 5. First, the controller 12 executes dubbing initial process in cooperation with the receiving apparatus 20 (S501). Next, when the forward end link information is associated with the content subject to transmission (Yes of S502), the controller 12 transmits the forward end link information such that the forward end link information is included in the HTTP header (S503). Further, the controller 12 starts transmission of the content subject to transmission (S504). In the case where there is no link information in the step S502, the controller 12 starts content transmission without transmitting the link information

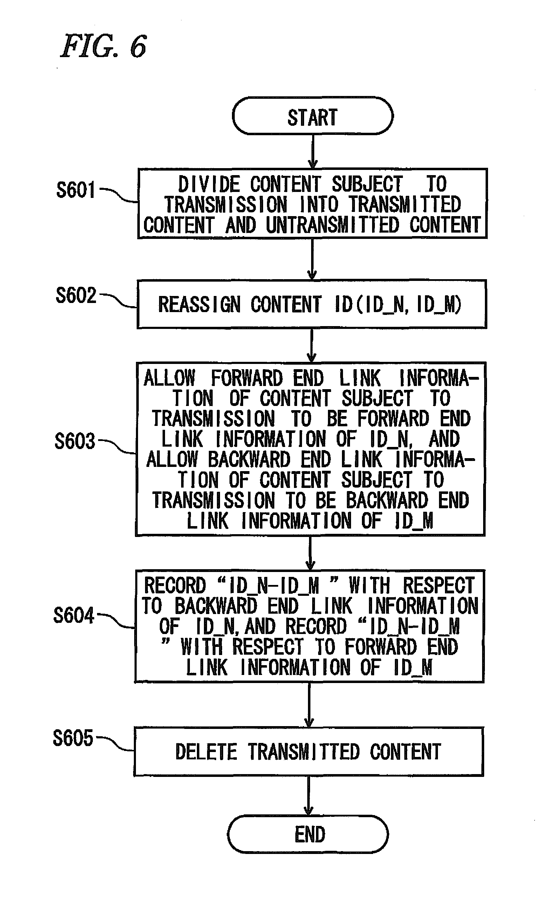

In the case where a request for instructing dubbing interruption is received during content transmission (Yes of S505), the transmitting apparatus 10 executes dividing process of content (S506). This division process will be described later with reference to Fig. 6. Next, the controller 12 transmits HTTP 0 chunk (S507) to transmit the backward end link information of the transmitted content such that the backward end link information is included in HTTP trailer (S508). Moreover, the controller 12 executes commitment process in cooperation with the receiving apparatus 20 to delete transmitted content stored in the recording medium 13 (S509).

On the other hand, in the case where transmission until the terminal end of content subject to transmission is performed (Yes of S510) when interruption request is not received in the S505 (No of S505), the controller 12 transmits HTTP 0 chunk (S511) to transmit the HTTP 0 chunk such that the HTTP 0 chunk is included in an empty HTTP trailer (S513).

Next, the content division process by the transmitting apparatus 10 will be described with reference to Fig. 6. When the controller 12 receives dubbing interruption request to stop transmission of content, the dividing module 14 divides content subject to transmission into transmitted content and untransmitted content (S601). Further, the controller 12 assigns identifier to the transmitted content and the untransmitted content (S602). For example, identifier of the transmitted content is designated as ID_N, and identifier of the untransmitted content is designated as ID_ M.

Next, the controller 12 associates, as the forward end link information of the content of ID_N, the forward end link information which has been associated with the content subject to transmission before division to associate, as the forward end link information of the content of ID_M, the backward end link information of the content subject to transmission before division (S603). Further, the link information preparing module 15 associates the backward end link information ID_N - ID_M with the content of ID_N, and associates the forward end link information ID_N - ID_M with the content of ID_M (S604).

Further, the controller 12 deletes the content subject to transmission before division which has been recorded on the recording medium 13 (S605). When content is moved to the receiving apparatus 20, the controller 12 deletes the content subject to transmission, whereas when content of which copyable number of times is set is copied to the receiving apparatus 20, the content to be copied may not be deleted.

In this case, the transmitting apparatus 10 copies the above-mentioned content with respect to the undivided content subject to transmission to divide content generated by copying. Alternatively, the transmitting apparatus 10 may copy a transmitted part of the content subject to transmission to generate the transmitted content to copy an untransmitted part to generate the untransmitted content. In any case, the transmitting apparatus 10 generates divided content while leaving the content subject to transmission which has been undivided on the recording medium 13. Further, the transmitting apparatus 10 subtracts the number of copyable times of the content subject to transmission in accordance with the above-mentioned division. In the case where the number of copyable times of the content subject to transmission of the undivided content reaches the number of limits, the concerned content may be deleted.

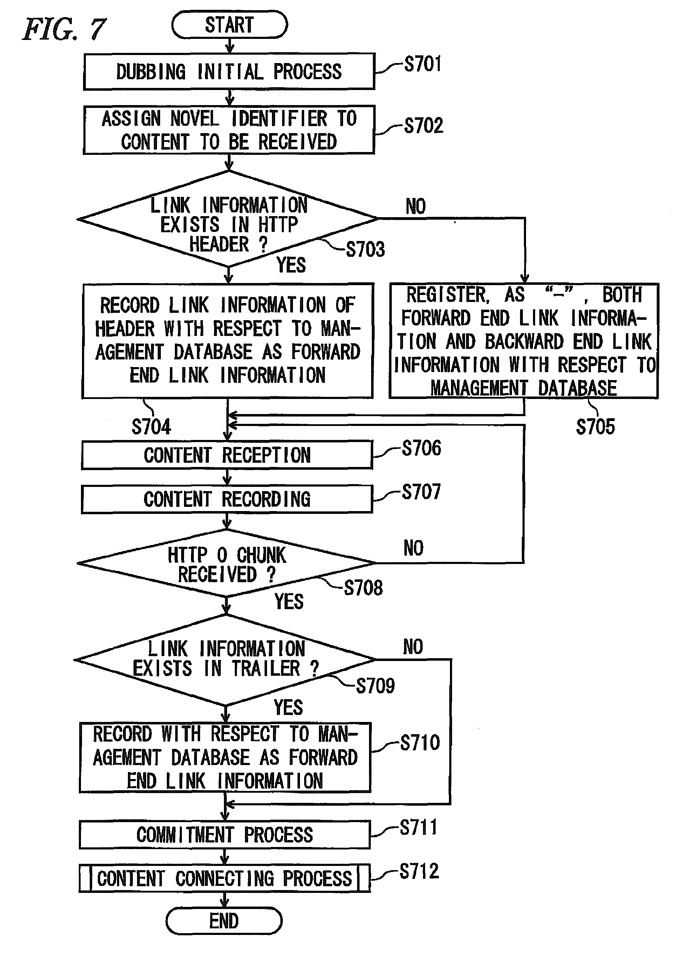

The content reception process by the receiving apparatus 20 will be described with reference to Fig. 7.

First, the controller 21 executes the dubbing initial process in cooperation with the transmitting apparatus 10 (S701). Further, the controller 21 assigns a novel identifier to content to be received from until now to record the identifier onto the management database 24 (S702). Subsequently, when the forward end link information is included in the received header (Yes of S703), the controller 21 associates the forward end link information with the identifier recorded in the step S602 (S704). In the case where no forward end link information is included in the header (No of S703), the controller 21 records "-" indicating the blank at the forward end of the identifier and the forward end link information which have been recorded in the step S702 (S704).

When data of content transmitted from the transmitting apparatus 10 is received (S706), the controller 21 records the data onto the recording medium (S707). The controller 21 continues reception recording of the data until HTTP 0 chunk is received. Further, the controller 21 receives the HTTP 0 chunk (Yes of S708), whereupon when the backward end link information is included in the received HTTP trailer (Yes of S709), the controller 21 associates the forward end link information with the identifier recorded in the step S602 (S710). Further, the controller 21 executes commitment to change data of the received content into utilizable state thereafter to associate identifier recorded in the step S602 with the content (S711). In addition, the connecting module 25 executes connecting process of content (S712).

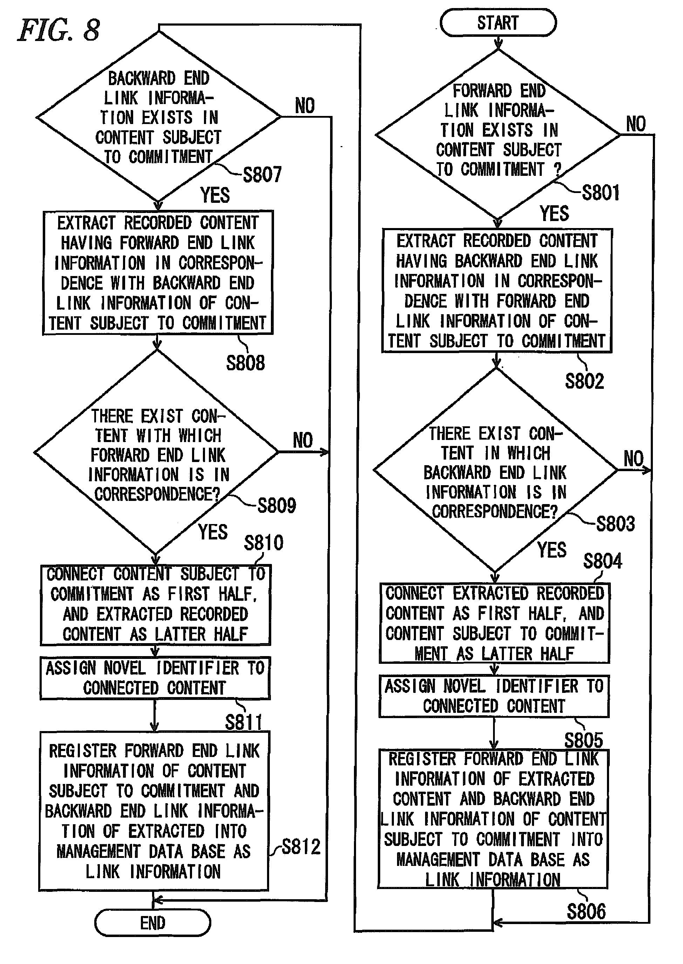

Fig. 8 illustrates the content connection (combination) process in the receiving apparatus 20. First, the connection discriminating module 23 discriminates in step S611 as to whether or not forward end link information is associated with content subjected to commitment (S801). In the case where the forward end link information is associated (Yes of S801), the connection discriminating module 23 extracts link information which is in correspondence with the forward end link information from the backward end link information registered in the management database 24 (S802). In the case where there is any backward end link information in correspondence with the forward end link information (Yes of S803), the connecting module 25 allows the content which has been connected with the backward end link information to be designated as the first half, and allows the content subjected to commitment to be designated as latter half, to thereby connect (combine) these contents (S804). Moreover, the controller 21 gives a novel identifier to the content generated by connection (S805). Further, the controller 21 associates, as forward end link information of the generated content, the forward end link information of the content subjected to commitment to register the extracted backward end link information onto the management database 24 in a manner associated therewith as the backward end link information of the generated content (S806).

Next, the connection discriminating module 23 discriminates as to whether or not the backward end link information is associated with content subjected to commitment in the S611 (S807). In the case where the backward end link information is associated (Yes of S807), the connection discriminating module 23 extracts, from the management database 24, the forward end link information in correspondence with the backward' end link information (S808). In the case where there is any forward end link information in correspondence with the backward end link information (Yes of S809), the connecting module 25 allows content associated with the forward end link information to be designated as latter half, and allows the content subjected to commitment to be as the first half, to thereby connect (combine) these contents (S810). Further, the controller 21 gives a novel identifier to the content generated by the connection (S811). In addition, the controller 21 associates, as the forward end link information of the generated content, the forward end link information extracted in the step S808 to associate, as the backward end link information of generated content, the backward end link information of content subjected to commitment to register these information onto the management database 24 (S812).

Although the embodiment has been described above, the embodiment is just an example and should not limit the scope of the invention. The novel embodiment may be practiced in other various forms, and part of it may be omitted, replaced by other elements, or changed in various manners without departing from the spirit and scope of the invention. These modifications also will fall within the scope of Claims and its equivalents.

## Claims

1. A transmitting apparatus, comprising:
a content transmitting module configured to perform a content transmission of a first content to a receiving apparatus;
a stopping module configured to stop the content transmission;
a generating module configured to divide the first content into a second content and a third content when the content transmission is stopped by the stopping module, the second content corresponding to a part of the first content which has been transmitted to the receiving apparatus, the third content corresponding to a part of the first content which has not been transmitted to the receiving apparatus;
an associating module configured to associate link information with each of the second content and the third content, the link information associating a backward end of the second content and a forward end of the third content;
a link information transmitting module configured to transmit the link information to the receiving apparatus after the content transmission is stopped; and
a communicating module configured to communicate with the receiving apparatus so that the second content is placed into a utilizable state in the receiving apparatus.

2. The transmitting apparatus of Claim 1,
wherein the content transmitting module starts the content transmission of the third content after the content transmission of the second content is stopped, and
wherein the link information transmitting module transmits the link information associated with the third content along with the content transmission of the third content.

3. The transmitting apparatus of Claim 1,
wherein the content transmitting module performs the content transmission of the first content from a middle position thereof,
wherein, when the stopping module stops the content transmission, the dividing module divides the first content into fourth to sixth contents, the forth content corresponding to a forward part before the middle position, the fifth content corresponding to a backward part after the middle position and having been transmitted, the sixth content corresponding to the backward part after the mid point and having not been transmitted,
wherein the associating module associates a second link information with the fourth content and associates a third link information with the sixth content, the second link information associating a backward end of the fourth content and a forward end of the fifth content, the third link information associating a backward end of the fifth content and a forward end of the sixth content, and
wherein the link information transmitting module transmits the second and third link information.

4. The transmitting apparatus of Claim 3,
wherein the content transmitting module starts the content transmission of the fourth or sixth content after the content transmission of the fifth content is stopped, and
wherein the link information transmitting module transmits the second or third information associated with the forth or sixth content along with the content transmission of the forth or sixth content.

5. The transmitting apparatus of Claim 1,
wherein the stopping module stops the content transmission in accordance with a user operation onto the transmitting apparatus or a control signal from the receiving apparatus.

6. The transmitting apparatus of Claim 1,
wherein the transmitting module starts the content transmission in accordance with a user operation onto the transmitting apparatus or a control signal from the receiving apparatus.

7. A receiving apparatus, comprising:
a content receiver configured to perform a content reception of a first content from a transmitting apparatus;
a link information receiver configured to receive, when the content reception is stopped, link information associating a backward end of a second content and a forward end of a third content, the second content corresponding to a part of the first content which has been received, the third content corresponding to a part of the first content which has not been received;
an associating module configured to associate the link information with the second content;
a communicating module configured to communicate with the transmitting apparatus so that the second content is placed into a utilizable state in the receiving apparatus; and
a connecting module configured to connect a plurality of files,
wherein the content receiver starts the content reception of the third content after the content reception of the second content is stopped,
wherein the link information receiver receives the link information associated with the third content along with the content reception of the third content, and
wherein the connecting module connects the second and third contents based on the link information.

8. The receiving apparatus of Claim 7,
wherein the content receiver performs the content reception of the first content from a middle position thereof, as the content reception of a fourth content,
wherein the link information receiver receives second link information indicating a content to be connected to a forward end of the forth content when the content reception is started, and receives third link information indicating a content to be connected to a backward end of the forth content when the content reception is stopped;
wherein the associating module associates the second and third link information to the forth content, and
wherein the connecting module connects a fifth content, which is received after the content reception of the fourth content is stopped, to the forward end or the backward end of the forth content in based on link information associated with the fifth content.

9. The receiving apparatus of Claim 7, further comprising:
a transmitting module configured to transmit a stop instruction against a content transmission of the transmitting apparatus in accordance with a user operation.

10. The receiving apparatus of Claim 7, further comprising:
a transmitting module configured to transmit a start instruction for a content transmission of the transmitting apparatus in accordance with a user operation.
